# EUROPÄISCHE PATENTSCHRIFT

(11) **EP 1 438 641 B1**
(45) Veröffentlichungstag und Bekanntmachung des Hinweises auf die Patenterteilung: **03.05.2006**
(21) Anmeldenummer: 02781121.5
(22) Anmeldetag: 07.10.2002
(51) Int. Cl.: G05B 19/042

(54) **ELEKTRONISCHE PAKETFACHANLAGE UND LOGISTIKSYSTEM**
PACKET BOX ELECTRONIC DEVICE AND LOGISTIC SYSTEM
DISPOSITIF ELECTRONIQUE DE CASIERS POUR COLIS ET SYSTEME LOGISTIQUE

(30) Priorität: 09.10.2001 DE 10149637
(43) Veröffentlichungstag der Anmeldung: 21.07.2004
(73) Patentinhaber: Deutsche Post AG, 53113 Bonn (DE)
(72) Erfinder: MAYER, Boris, 53113 Bonn (DE); BORGER, Christian, 53117 Bonn (DE)
(74) Vertreter: Jostarndt, Hans-Dieter
(86) Internationale Anmeldenummer: PCT/DE2002/003761
(87) Internationale Veröffentlichungsnummer: WO 2003/034162

(56) Entgegenhaltungen:
- WO-A-00/51750
- WO-A-01/00069
- WO-A-01/30213
- DE-A- 10 000 830
- DE-U- 20 021 792
- FR-A- 2 713 461
- US-A- 5 475 378

## Beschreibung

Die Erfindung betrifft eine elektronische Paketfachanlage.

Elektronische Paketfachanlagen sind beispielsweise aus der Deutschen Offenlegungsschrift DE 100 00 830 A1 bekannt, welche ein Verfahren zum Deponieren von Gütern in mindestens einem Schließfach offenbart. Die für das Verfahren eingesetzte Paketfachanlage weist mehrere Paketfächer auf, die mittels eines elektronischen Schließsystems geöffnet und geschlossen werden. Jeweils mehreren Paketfächern ist eine Bedieneinheit in Form eines Terminals zum Einlesen oder Ausgeben von Daten zugeordnet. Das Schließsystem und die Bedieneinheiten stehen in Verbindung mit einem Computer, welcher die Paketfachanlage steuert.

Die Offenlegungsschrift offenbart ferner eine.Vernetzung der Computer mehrerer Schließfachanlagen zu einem Rechnerverbund, der einen zentralen Verwaltungsrechner aufweist. Der Verwaltungsrechner gehört beispielsweise zu einem Zustelldienst, der alle Warenbewegungen in den Schließfächern überwacht.

Der Erfindung liegt die Aufgabe zugrunde, eine elektronische Paketfachanlage zu schaffen, die eine flexible Zustellung und Abholung von Paketen aus Paketfächern ermöglicht.

Erfindungsgemäß wird diese Aufgabe dadurch gelöst, dass die elektronische Paketfachanlage so ausgestaltet wird, dass sie eine Vielzahl von elektronischen Paketfächern enthält, wobei jeweils mehreren elektronischen Paketfächern eine Bedienungseinheit zugeordnet ist, und eine Zentralsteuereinheit zur Steuerung der Bedienungseinheiten vorgesehen ist, wobei die Zentralsteuereinheit ein Mittel zu einer veränderbaren Zuordnung der Paketfächer zu den Bedienungseinheiten enthält.

Die Erfindung sieht vor, dass die elektronische Paketfachanlage aus mehreren einzelnen Zustellvorrichtungen besteht, wobei die Zustellvorrichtungen mit einer oder mehreren Bedienungseinheiten ausgestattet sind. Mehrere oder alle Bedienungseinheiten werden durch die Zentralsteuereinheit gesteuert.

Es ist zweckmäßig, dass die Bedienungseinheiten ein Steuerungsmittel zur Steuerung des Öffnens und/oder des Schließens von den Bedienungseinheiten zugeordneten Paketfächern enthalten.

Die einzelnen elektronischen Paketfachanlagen sind miteinander zu Clustern verbunden.

Das Vorsehen einer Zentralsteuereinheit erhöht die Funktionalität und den Leistungsumfang der elektronischen Paketfachanlage erheblich.

Insbesondere ist es zweckmäßig, dass die Zentralsteuereinheit ein Mittel zur Zuordnung der Paketfächer zu den Bedienungseinheiten enthält.

Die Ausführungsform, bei der die Zuordnung zwischen den Paketfächern und den Bedienungseinheiten durch die Zentralsteuereinheit erfolgt, hat den Vorteil, dass hierdurch die elektronische Paketfachanlage leicht an veränderte Betriebsparameter anpassbar ist.

Insbesondere ist es vorteilhaft, dass die Zuordnung der Paketfächer zu den Bedienungseinheiten veränderbar ist.

Hierdurch ist es beispielsweise möglich, dass bei dem Ausfall einer Bedienungseinheit bisher dieser Bedienungseinheit zugeordnete Paketfächer einer anderen Bedienungseinheit zugeordnet werden können.

Eine besonders bevorzugte Ausführungsform der Erfindung sieht vor, die elektronische Paketfachanlage so auszugestalten, dass die Zentralsteuereinheit eine Schnittstelle zum Empfangen von Informationen von einem Datenbank-Server mit Belegungsinformationen aufweist.

Hierdurch ist es möglich, die elektronische Paketfachanlage flexibel an Betriebssituationen und Benutzerverhalten anzupassen.

Beispielsweise können bei dem Ausfall einer Bedienungseinheit die bisher dieser Bedienungseinheit zugeordneten Paket fächer einer oder mehreren anderen Bedi-enungseinheiten zugeordnet werden. Auch dies verstärkt die flexible Anpassung an Bedürfnisse oder Verhaltensweisen der Benutzer der Paketfachanlage.

Besonders bevorzugte Ausführungsformen der Erfindung zeichnen sich dadurch aus, dass sowohl eine interne Kommunikation zwischen der Zentralsteuereinheit und den Bedienereinheiten als auch eine externe Kommunikation zwischen der Zentralsteuereinheit und einem oder mehreren Datenbank-Servern vorgesehen sind.

Eine derartige Integration der Datenkommunikation erfolgt in einer zweckmäßigen Ausführung der Erfindung dadurch, dass die Zentralsteuereinheit eine Schnittstelle zum Senden von Informationen an einen mit Belegungsinformationen ausgestatteten Datenbank-Server aufweist.

Eine weitere Erhöhung der Flexibilität und Vielseitigkeit der elektronischen Paketfachanlage lässt sich dadurch erzielen, dass die Zentralsteuereinheit einen Computer enthält, der Betriebsdaten und/oder Belegungszustände der Paketfächer speichern und verarbeiten kann.

Der Begriff "Computer" ist in keiner Weise einschränkend zu verstehen. Es kann sich hierbei um eine beliebige, zur Durchführung von Berechnungen geeignete Einheit handeln, beispielsweise eine Workstation, einen Personalcomputer, einen Microcomputer oder eine zur Durchführung von Berechnungen und/oder Vergleichen geeignete Schaltung.

Ferner ist es zweckmäßig, die Zentralsteuereinheit mit weiteren Schnittstellen zur Überprüfung und/oder Veränderung von Betriebszuständen auszustatten. Hierdurch wird die elektronische Paketfachanlage besonders wartungsfreundlich.

Ein weiterer Gegenstand der Erfindung ist ein Logistiksystem, das sich dadurch auszeichnet, dass es mehrere miteinander vernetzte elektronische Paketfachanlagen enthält.

Ein derartiges Logistiksystem bildet eine besonders bevorzugte Lösung der erfindungsgemäßen Aufgabe, eine flexible Zustellung und Abholung von Paketen aus Paketfächern zu ermöglichen.

Durch die Vernetzung mehrerer elektronischer Paketfachanlagen ist es insbesondere möglich, Postsendungen besonders flexibel zuzustellen.

So ist es beispielsweise für den Fall, dass alle Paketfächer einer elektronischen Paketfachanlage belegt sind, möglich, weitere Postsendungen zu einer anderen elektronischen Paketfachanlage zu transportieren und dort für eine Abholung bereitzustellen.

Durch die Integration eines vorzugsweise zentral betriebenen Datenbank-Servers ist es möglich, ein Zustellen von Paketsendungen an die elektronischen Paketfachanlagen in Abhängigkeit von dem Belegungszustand der elektronischen Paketfachanlage und/oder der in ihnen enthaltenen Paketfächer durchzuführen.

Weitere Vorteile, Besonderheiten und zweckmäßige Weiterbildungen der Erfindung ergeben sich aus den

Unteransprüchen und der nachfolgenden Darstellung bevorzugter Ausführungsbeispiele der Erfindung anhand der Zeichnungen.

Von den Zeichnungen zeigt
- Fig. 1: einen Aufbau einer als Kommunikationsplattform mit der elektronischen Paketfachanlage geeigneten Automatenschnittstelle;

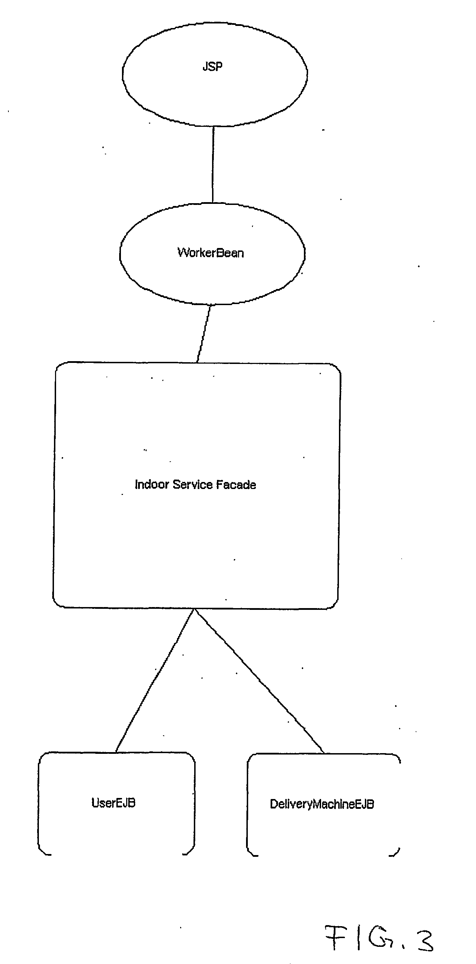

- Fig. 2: eine Prinzipdarstellung von eingesetzten Komponenten zur Benutzerregistrierung, Benutzerbetreuung und zur Sendungsverfolgung;

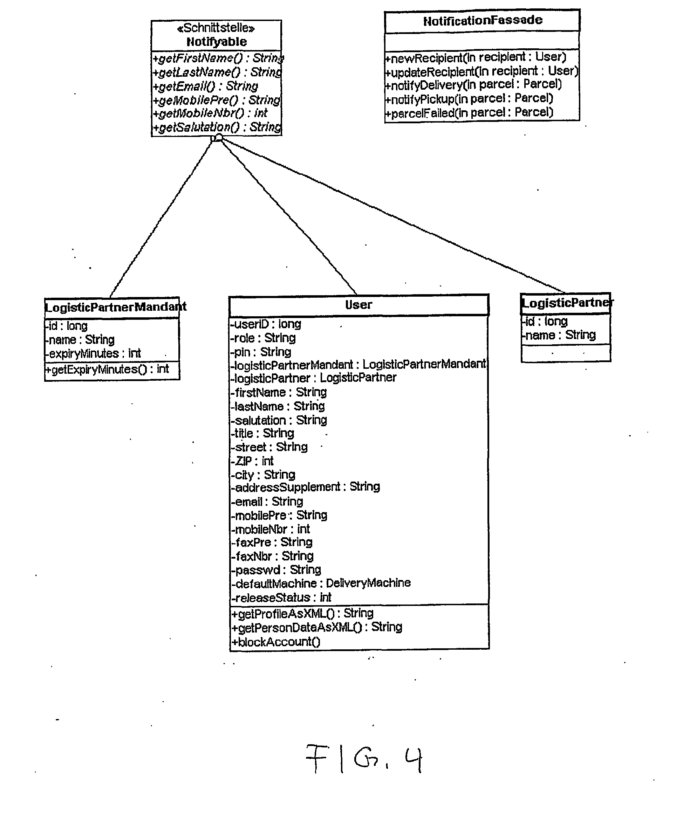

- Fig. 3: eine Prinzipdarstellung von Funktionsaufrufen für die Implementation von Innendienst-Funktionen;
- Fig. 4: eine Prinzipdarstellung von zur Benutzerbenachrichtigung eingesetzten Schnittstellen;

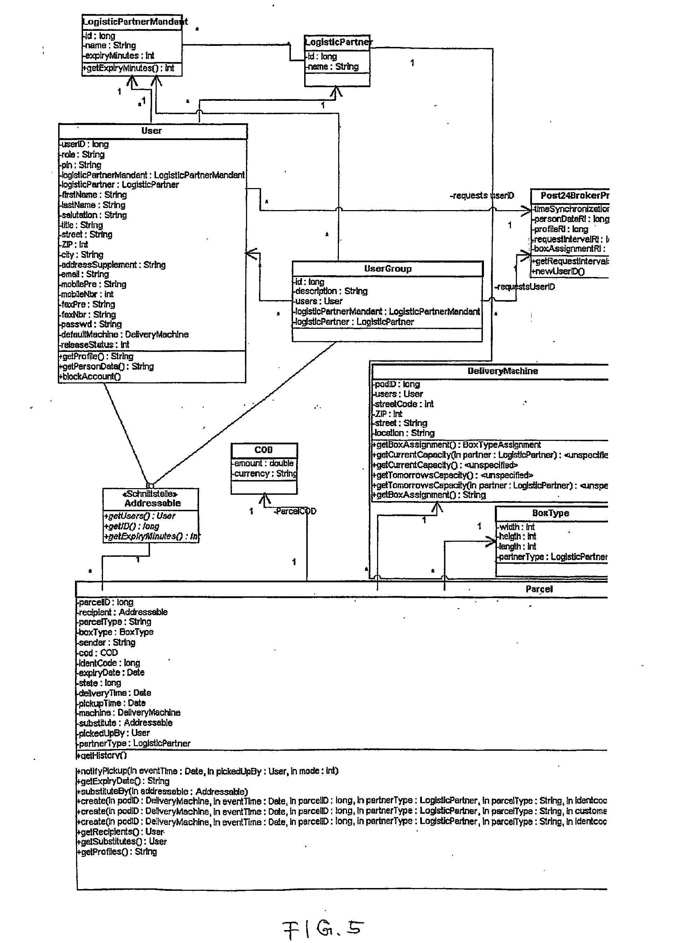

- Fig. 5: eine Detaildarstellung von für die Belegung und Verwaltung der Paketfächer eingesetzten Schnittstellen;

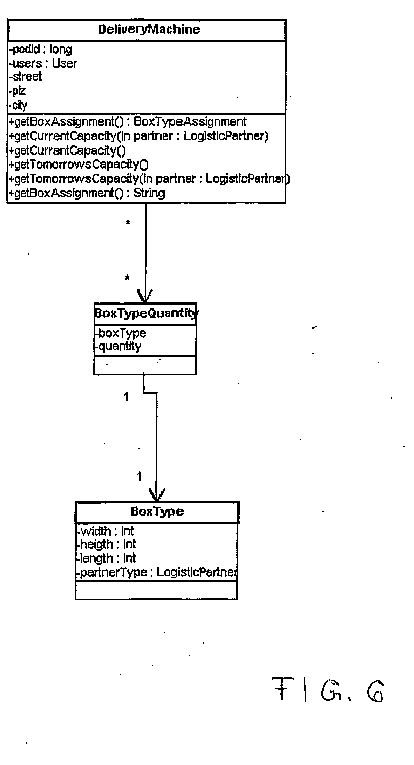

- Fig. 6: eine Detaildarstellung von für die Automatenkonfiguration und die Kapazitätsauslastung eingesetzten Schnittstellen und

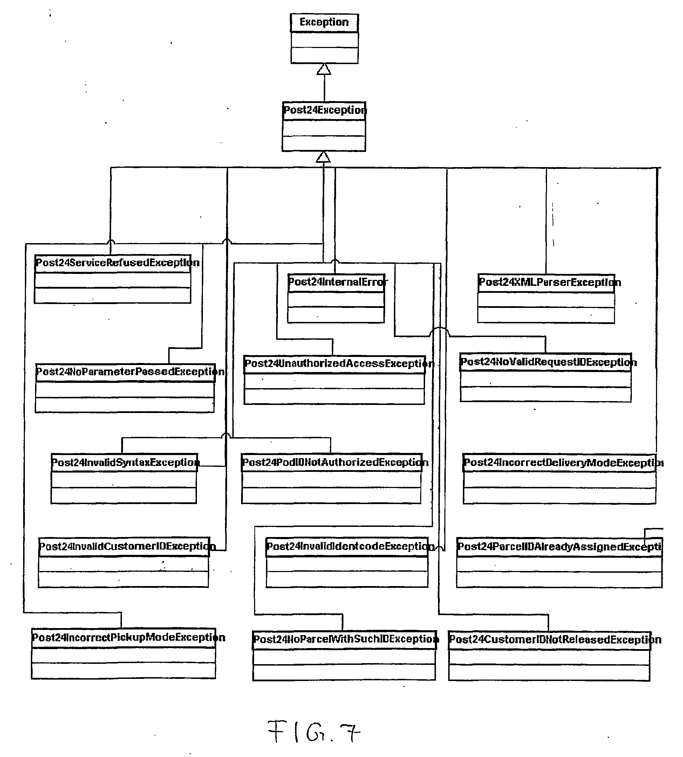

- Fig. 7: Verfahrensschritte zur Berichtigung von Fehlern.

Das nachfolgend dargestellte Ausführungsbeispiel zeigt eine Integration der elektronischen Paketfachanlage in ein umfassendes Logistiksystem.

Eine derartige Integration der elektronischen Paketfachanlage in ein Gesamtsystem ist besonders zweckmäßig, da hierbei die durch den erfindungsgemäßen Aufbau der elektronischen Paketfachanlagen bewirkte Flexibilität ihres Einsatzes besonders wirksam genutzt werden kann.

Obwohl ein derartiger Einsatz der elektronischen Paketfachanlagen in dem logistischen Gesamtsystem besonders bevorzugt ist, können grundsätzlich die elektronischen Paketfachanlagen ohne eine Vernetzung betrieben werden. Auch in diesen Ausführungsformen bewirkt die Integration der. Zentralsteuereinheit zur Steuerung der Bedienungseinheiten eine Flexibilisierung der Benutzung der elektronischen Paketfachanlage.

Durch die Vernetzung mehrerer Paketfachanlagen miteinander und/oder mit dem vorzugsweise zentral eingesetzten Datenbank-Server werden die Einsatzmöglichkeiten der Erfindung jedoch noch weiter erhöht.

Bei Integration mehrerer dieser vorteilhaften Komponenten ergibt sich ein Gesamtsystem, das folgende Bestandteile aufweist und dessen Bestandteile wegen der Möglichkeit, einen automatisierten Rund-um-die-Uhr-Betrieb zu realisieren, nachfolgend auch mit der Bezeichnung Post 24 bezeichnet werden:
1. Eine Vielzahl von Paketausgabe-Automaten, die vorzugsweise jeweils wenigstens eine Bedienungseinheit aufweisen.
2. Eine Zentralsteuereinheit, mit der die einzelnen Automaten in Clustern vernetzt sind und die die Betriebszustände und -funktionen der Automaten überwacht. Die Zentralsteuereinheit dient als "Konzentrator" für die Pakettransaktionen, die er an den Post 24-Server weiterleitet. Zudem verteilt sie die Betriebsanweisungen des Post 24-Servers auf die Paketautomaten.
3. Der Post 24-Server, der die Kunden- und Paketdaten verwaltet und die Vorgänge am Automaten registriert und steuert und die zentralen Programm-Anwendungen bedient (Registrierung, CallCenter, Track&Trace u.a).

Das System ist modular aufgebaut. Es ist eine standardisierte Schnittstelle definiert, die die Kommunikation zwischen Automaten, beziehungsweise ControlCenter und dem Post 24-Server regelt. Somit können Automaten von verschiedenen Herstellern einbezogen werden.

Der modulare Aufbau der jeweiligen Paketfachanlagen eignet sich besonders gut zur Erhöhung der Flexibilität und Vielseitigkeit sowohl der einzelnen elektronischen Paketfachanlagen als auch des logistischen Gesamtsystems.

Vorzugsweise sind die in dem Logistik-System eingesetzten elektronischen Paketfachanlagen so aufgebaut, dass sie die Funktionen und Betriebsinhalte des logistischen Gesamtsystems besonders wirksam und effizient umsetzen.

Grundsätzlich lassen sich die elektronischen Paketfachanlagen durch eine Vielzahl verschiedener technischer Lösungsmöglichkeiten realisieren.

Die nachfolgend dargestellten Ausführungsformen elektronischer Paketfachanlagen eigenen sich jedoch wegen ihrer Zuverlässigkeit und Benutzerfreundlichkeit besonders.

Eines der beiden Systeme zeichnet sich dadurch aus, dass die Paketfächer jeweils einzeln mit einer Tür verschließbar sind. Eine andere, gleichfalls bevorzugte Ausführungsform der Ausgestaltung der Paketfachanlage zeichnet sich durch ein Paternostersystem mit speziellen Transportmechanismen für einzelne Fächer zur Ablage und Entnahme der einzelnen Pakete aus.

Bei den dargestellten Ausführungsformen ermöglicht der Automat ein Beladen und das Abholen von Paketen, beziehungsweise Inhalten, über verschieden große Paketfächer. Ein besonders bevorzugtes Merkmal des Automatensystems ist, dass Paketfächer nur temporär bestimmten Empfängern zugewiesen werden, nämlich nur dann, wenn sie etwas für ihn enthalten. Dazu sollten zum einen die potenziellen Empfänger dem Automatensystem bekannt sein und zum anderen die Sendungen empfängerbezogen und zentral verwaltet werden.

Beim Beladen wird ein Paket-Identcode und ein Empfängeridentifikationscode erfasst. Anhand des Empfängeridentifikationscodes wird beim Post 24-Server (Zentralsystem) der zugehörige Zugangs-Code abgefragt. Bei der Abholung identifiziert sich der Abholer mit seinem persönlichen Empfängeridentifikationscode, beispielsweise unter Verwendung einer Magnetkarte und dem geheimen, persönlichen Zugangscode. Wenn diese Informationen mit der im Automaten gespeicherten übereinstimmen, wird der Inhalt einer Box dem Empfänger freigegeben.

Handelt es sich um ein Nachnahmepaket oder ist bei der Ausgabe des Paketes das Inkasso eines Betrages fällig, so wird der Betrag vorher angezeigt und der Abholer kann über ein Zahlungs-Terminal (EG-Karte, Geld-Karte, u.a.) diesen Betrag überweisen.

Pakete (oder Waren), die von Empfängern wieder zurückgegeben werden, werden durch den Automaten erfasst und an den Post 24-Server gemeldet, der die Abholung durch entsprechend zuständige Logistikmitarbeiter veranlasst.

Zweckmäßigerweise weist die Zentralsteuereinheit, die auch als Leitstand bezeichnet wird, die nachfolgend dargestellten Eigenschaften auf.

Die einzelnen Automaten sind über die Zentralsteuereinheit vernetzt, die die Kommunikation clustert und zusammenfasst ("Konzentrator"). Die Überwachung von Service und Wartungsaufgaben erfolgt über die Zentralsteuereinheit. Die Zentralsteuereinheit erkennt, ob Automaten oder Bestandteile des Automaten (Bedieneinheit, Drucker, einzelne Boxen) betriebsbereit sind und welche Betriebsereignisse an einzelnen Automaten stattfinden.

Der Post 24-Server ist ein Daten-Server, der mit den Automaten, beziehungsweise dem Leitstand, über internetbasierte Web-Technologie vernetzt ist. Der Post 24-Server bildet eine Schnittstelle zu weiteren Datenbankapplikationen. Diese Datenbankapplikationen ermöglichen beispielsweise eine Integration von Abrechnungs- und Sendungsverfolgungsfunktionen.

Der Automat wird vorzugsweise nur von Empfängern benutzt, die sich vorher bei der Deutschen Post für diesen Service angemeldet haben und deren Daten auf dem Post 24-Server gespeichert sind. Die so registrierten Empfänger erhalten eine Empfängeridentifikationsangabe, die sie als Teil ihrer Adressierung verwenden sollen und einen persönlichen, geheimen Zugangscode.

Kommt es zu einer Einlieferung in den Automaten, wird der Empfänger vom Post 24-Server automatisch benachrichtigt. Die Benachrichtigung erfolgt vorzugsweise elektronisch, beispielsweise durch den Versand einer SMS oder die Absendung einer email. Es ist jedoch gleichfalls möglich, dass automatisch ein Brief gedruckt und an den Empfänger geschickt wird. Der Empfänger kann dann nach Belieben das Paket am Automaten abholen. Wenn dies nicht innerhalb einer bestimmten Zeit erfolgt, wird eine Erinnerung gesendet und sobald die Zustellfrist abläuft, das Paket zur Rücksendung an den Absender gesetzt.

Das Paketabholsystem ist für verschiedene Einsatzbereiche geeignet. Zum einen können im Endkundenbereich normale Pakete mit diesem Automatensystem zugestellt werden, zum anderen aber auch besonderen Anforderungen im Geschäftskundenbereich entsprochen werden.

So ist ein fester oder variabler Anteil an Automatenfächern für Geschäftspartner und Kunden des das System einsetzenden Logistikunternehmens vermietbar und kann von diesen entsprechend genutzt werden. Das Automatensystem stellt damit für diese Kunden ein dezentrales Depot dar, dessen Warenbestand und -bewegung zentral gesteuert wird und entsprechend abgerechnet werden kann.

Es handelt sich insbesondere um ein System aus zentralen und dezentralen Komponenten, um ein intelligentes, bedarfsgerechtes Bestell- und Auslieferungssystem zu realisieren.

Das System beinhaltet verschiedene Komponenten und Schnittstellen, die wirksam und flexibel ein Logistiksystem mit bisher nicht erzielbaren Zustell- und Serviceleistungen realisieren.

Beispiele von Funktionen, die in das System integriert werden, sind:
- Paketdatenverwaltung
- Benutzerdatenverwaltung
- Registrierung von Kunden
- B2B-Partnermanagement
- Tracking von Paketen
- Verwaltung der Automatenkonfiguration
- Kapazitätsplanung
- Benachrichtigung
- Statistische Datenauswertung
- Automatenschnittstelle
- Innendienstservice

Es ist zweckmäßig, zwischen Basiskomponenten zur Verwaltung und dem Zugriff auf die Paket- und Benutzerdaten sowie sekundären Komponenten, welche die Businessprozesse 4 in das System abbilden, zu unterscheiden.

Die modulare Struktur des Systems erlaubt eine unabhängige, inkrementelle Entwicklung der verschiedenen Services.

Da eine besonders bevorzugte Ausführungsform des erfindungsgemäßen Systems und seiner gleichfalls erfindungsgemäßen Komponenten auf einer Implementation der EJB-Technologie basiert, werden die Basiskomponenten auf Paket- und Benutzer-EJBs (Enterprise Java Beans) abgebildet. Alle anderen Komponenten kommunizieren mit diesen EJBs, wenn sie Paket- und Kundendaten erfragen oder verändern müssen.

Die sekundären Komponenten sind zum Teil komplexe Teilsysteme, die aus Klassen, EJBs und graphischen Benutzerschnittstellen (Graphical User Interfaces - GUIs) aufgebaut sind. Um eine vom Komponentendesign unabhängige Kommunikation der Komponenten zu ermöglichen, stellt jede Komponente eine verbindliche Schnittstelle zu seinen Services in Form eines Fassadenobjektes- oder EJB zur Verfügung. Die Schnittstellen, der verschiedenen Komponenten werden im Folgenden beschrieben:

### Automatenschnittstelle:

Die Automatenschnittstelle ist die Kommunikationsplattform mit den Automaten. Die Schnittstelle nimmt Anfragen der Automaten entgegen und leitet sie an die verantwortlichen Komponenten weiter. Falls der Automat Daten als Antwort auf seine Anfrage erwartet, werden diese von den Komponenten an die Schnittstelle zurückgegeben und anschließend an die Automaten weitergeleitet.

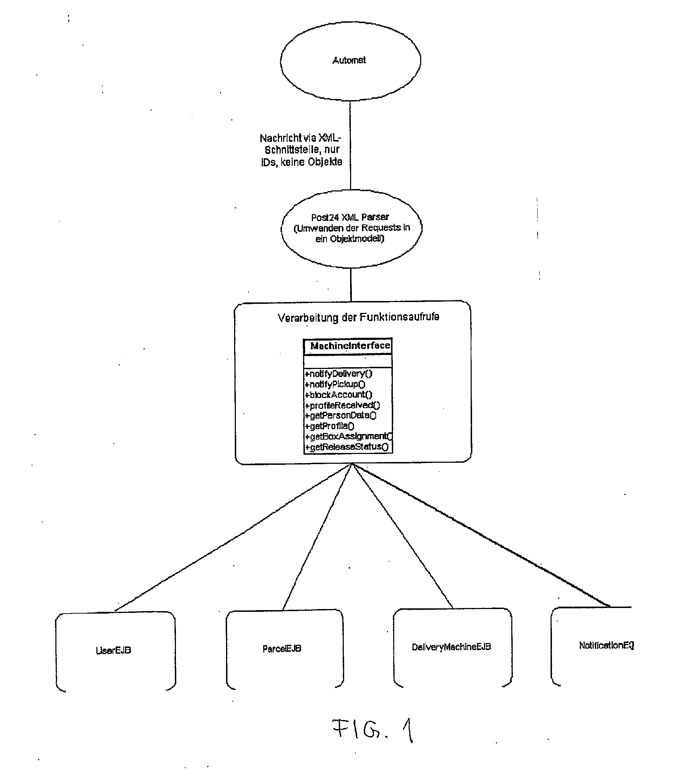

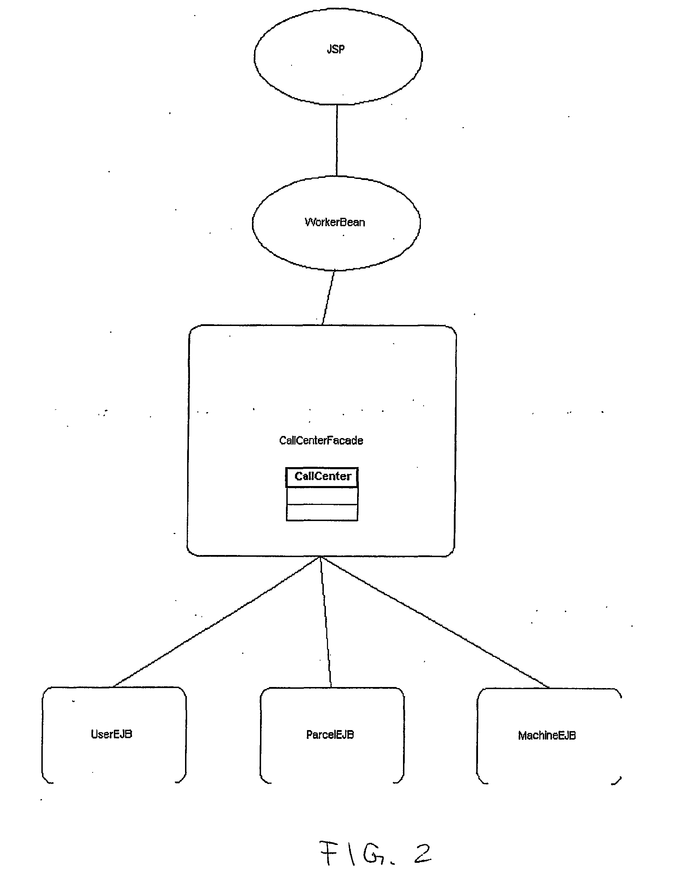

Fig. 1 zeigt den Aufbau der Komponenten. Ein XML-Parser übernimmt die Abbildung der vom Automaten per http post gesendeten XML-Dateien in von dem Logistiksystem interpretierbare Funktionsaufrufe der Klasse Maschinen-Interface, wertet die Funktionsaufrufe aus und leitet sie an die verantwortlichen Komponenten User, Parcel, DeliveryMachine und Notification weiter.

Die Komponenten Benutzerregistrierung, B2B Partnermanagement und Pakettracking werden vorzugsweise in einer CallCenter-Fassade gekapselt. Die Fassade übernimmt die Kommunikation mit den EJBs zur User- und Paketdatenverwaltung, das heißt; User und Parcel. Die Komponente stellt web-basierte GUIs zur Registrierung und Pakettracking zur Verfügung. Diese werden in JSP codiert. Aktionen der Nutzer werden mittels einer Worker Bean in Funktionsaufrufe übersetzt und an die CallCenter-Fassade weitergereicht. Vorzugsweise übernimmt erst diese die Ausführung der Business-Logik. Untenstehende Graphik gibt eine grobe Übersicht über diese Zusammenhänge.

Die Komponente Innendienst Services kapselt die vom Logistiksystem bereitgestellten Dienste für den Innendienst in den Zustellbasen. An der Schnittstelle zu den Mitarbeitern des Innendienstes steht ein JSP, das das GUI realisiert. Aktionen der Innendienstmitarbeiter werden mittels einer Worker Bean in Funktionsaufrufe übersetzt und an die Indoor Service-Fassade weitergereicht. Die Indoor Service-Fassade bildet damit die Schnittstelle zu der eigentlichen Funktionslogik der Komponente.

Die Indoor Service-Fassade stellt darüber hinaus die Kommunikationsschnittstelle zu den anderen Komponenten des Systems dar.

Zur Abbildung der geforderten Funktionslogik benötigt die Komponente Zugriff auf die Basiskomponenten User und DeliveryMachine.

Der Aufbau der Komponente ist in untenstehender Abbildung dargestellt;

Eine weitere Komponente, die wegen des modularen Aufbaus des Logistiksystems problemlos eingebaut werden kann und das Logistiksystem und die in ihm eingesetzten Bestandteile, insbesondere die Paketfachanlagen zweckmäßig fortbildet, ist eine Benachrichtigungskomponente.

Die Benachrichtigungskomponente realisiert das Versenden von Nachrichten an die Nutzer des Logistiksystems. Die Komponente hat vorzugsweise zwei Aufgaben. Sie bildet die Benachrichtigungsregelung der Logistikpartner ab und übernimmt das technische Versenden der Nachrichten an die Geräte der Kunden.

Die Schnittstelle zu den anderen Komponenten des Systems wird durch eine Fassadenklasse NotificationFassade realisiert. Diese Klasse stellt eine Menge von Methoden bereit, die dazu dienen, die Komponente über Ereignisse zu informieren, die eine Benachrichtigung an einen Nutzer auslösen können. Derzeit werden solche Ereignisse von der Schnittstellenkomponente als Ergebnis einer Bewegung am Automaten und der Registrierungskomponente ausgelöst. Um Ziel und Inhalt der Nachricht konfigurieren zu können, benötigt die Komponente Zugriff auf Adressdaten der Nachrichtenempfänger. Alle in dieser besonders bevorzugten Ausführungsform des Logistiksystems verwalteten

Nachrichtenempfänger sollten daher die Schnittstelle Notifyable bereitstellen. Dies sind beispielsweise die EJBs LogisticPartnerMandant, User und LogisticPartner.

Die Organisation der Benutzer- und Paketdaten kann auf vielfältige Weise erfolgen. Nachfolgend wird ein in das modulare System besonders zweckmäßig implementierbares Benutzer- und Paketmanagement in Form eines objektorientierten Modells (Objektmodells) dargestellt.

Das zentrale Objekt des Objektmodells für die Benutzerverwaltung ist das EntityBean UserEJB. In diesem Objekt werden alle Daten zu Personen gespeichert, die den Automaten bedienen dürfen. Es sind sowohl Endkunden wie auch Zusteller und Servicepersonal als User klassifiziert. Auf ein komplexes Objektmodell (Person als Basisklasse, abgeleitete Klassen für die verschiedenen Rollen der Person) wurde verzichtet.

Daraus ergibt sich die bevorzugte Ausführungsform, die Rolle des Users als Attribut in das Objekt zu legen. Die Rolle ist als int definiert. In der Const Klasse sind sprechende Variablennamen definiert, beispielsweise:

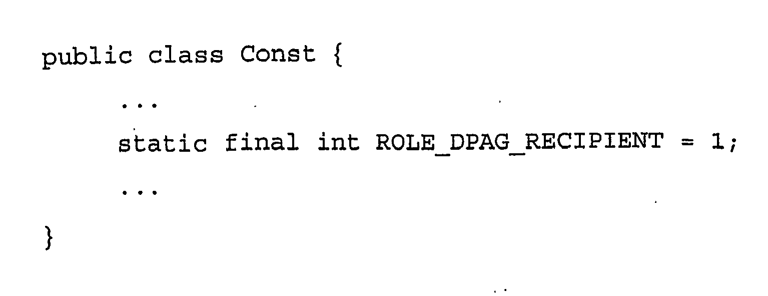

Des Weiteren sollte das User Objekt einen Verweis auf den zugeordneten LogisticPartner resp. LogisticPartnerMandant haben. LogisticPartner sind beispielsweise das Postversandunternehmen, welches das Logistiksystem betreibt, beziehungsweise weitere Unternehmen, denen ein Zugriff auf Bestandteile des Logistiksystems einschließlich einer Belegung von Paketfächern ermöglicht wird. LogisticPartnerMandanten sind die Kunden eines LogisticPartners, also zum Beispiel die Telekom als Danzas-Kunde.

Je nach Rolle des Users enthält das Objekt eine Referenz auf einen LogisticPartner (ROLE_B2B_DELIVERY_AGENT) oder auf einen LogisticPartnerMandant (ROLE_B2B_RECIPIENT). Die jeweils andere Referenz bleibt leer (es dürfen niemals beide Referenzen gleichzeitig gesetzt sein, da eine Person entweder Zusteller oder Abholer ist, niemals beides).

Das Objekt UserGroupEJB (ebenfalls ein EntityBean) erlaubt die Zusammenfassung mehrerer User zu einer Gruppe. Neben einer Liste von Usern hat die UserGroup eine Referenz auf den LogisticPartner resp. den LogisticPartnerMandanten, zu dem alle Mitglieder der Gruppe gehören. Die redundante Ablage der Referenz sowohl im User wie auch in der UserGroup vereinfacht den Zugriff auf Informationen im LogisticPartner(Mandant).

Da an beide Typen (User und UserGroup) Pakete geschickt werden können, implementieren die beiden Objekte das Interface Addressable. Die Schnittstelle hat die Methoden getUsers(), getID() und getExpiryMinutes(). Damit ist gewährleistet, dass Pakete, die an ein Addressable geschickt werden, vom Server verarbeitet werden können.

Die getUsers () Methode liefert eine Liste von User EJBs. Sofern es sich um eine UserGroup handelt, enthält diese Liste mehrere EJBs, handelt es sich um einen User, ist nur ein EJB enthalten.

Die getID() Methode gibt die ID des Users oder der UserGroup zurück. Da das Addressable persistent gespeichert werden können muss, ist durch diese ID das darunterliegende Objekt auffindbar. Daraus ergibt sich die Anforderung, die Ids für User und UserGroup aus einem Nummernkreis zu nehmen. Dazu gibt es in dem Objekt Post 24ServerProperties die Methode newUserID (). Diese liefert eine eindeutige, fortlaufende ID zurück. Intern greift diese Methode auf eine Datenbankanwendung, insbesondere eine Oracle-Sequence zu.

Die Methode getExpiryMinutes() im Addressable wird benötigt, um das ExpiryDate des Paketes ermitteln zu können. Die erlaubte Verweilzeit eines Paketes im Automaten ist mandantenabhängig. Zur Berechnung des ExpiryDates greift die Methode getExpiryMinutes() in beiden Objekten User und UserGroup auf die Methode
LogisticPartnerMandant.getExpiryMinutes() zu und addiert diese erlaubte Verweilzeit zum aktuellen Zeitpunkt.

User und UserGroup werden durch die Registrierung, beziehungsweise das Administrationstool, kreiert.

Zur Verwaltung der Pakete gibt es das EntityBean Parcel. Die ParcelID wird vom Automaten vergeben und über die Schnittstelle dem Server beim notifyDelivery() mitgeteilt. Darauf kreiert die Automatenfassade ein neues Parcel Objekt mit der ParcelID als Primary Key.
Der recipient (übermittelt in Form einer Kundennummer) wird als Addressable hinterlegt. Zusätzlich zum recipient gibt es das Attribut substitute, ebenfalls vom Typ Addressable. Es kann nicht beim notifyDelivery(), sondern zu einem späteren Zeitpunkt durch Aufruf der Methode substituteBy (Addressable addressable) gesetzt werden. Durch dieses Attribut wird die Vertreterregelung abgebildet. Das Parcel Objekt bietet die Methoden getRecipients() und getSubstitutes(), die jeweils eine Liste von User Objekten zurückgeben.

Beim Erzeugen eines neuen Parcel Objektes, zum Beispiel durch die Automatenschnittstelle beim notifyDelivery (), wird das ExpiryDate mit dem oben erwähnten Verfahren berechnet und dem Parcel Objekt mitgeteilt. Somit.enthält die create-Methode das expiryDate. Jeder LogisticPartner kann dabei unterschiedliche Berechnungsregeln für das ExpiryDate haben.

Bei Nachnahmepaketen wird ein COD Objekt übergeben, Päckchen und Pakete ohne Nachnahme werden durch eine create-Methode ohne COD erzeugt. Bei Paketen wird in der create-Methode der IdentCode des Paketes übergeben.

Zusätzlich wird dem Parcel Objekt mitgeteilt, zu welchem LogisticPartner es gehört. Diese Information ist für die Kapazitätenplanung notwendig.

Die Historisierung geschieht datenbankseitig durch einen Trigger, der vor der Änderung eines Datensatzes den alten Datensatz in eine Archivtabelle überträgt. Die Methode getHistory() liefert eine Auflistung des Status aller Archiveinträge.

Die Automatenkonfiguration und das Kapazitätsmanagement werden vorzugsweise gleichfalls als modulare Bestandteile in das Logistiksystem integriert.

Die Automaten des Post 24 Systems stellen eine feste Anzahl von Fächern unterschiedlicher Größe zur Aufbewahrung zur Verfügung. Die Fächer werden von unterschiedlichen Logistikunternehmen genutzt. Da die Aufteilung der Automatenfächer auf die Logistikunternehmen sowohl für das Pakethandling als auch zur Kostenberechnung bekannt sein sollte, werden Automatenkonfigurationen in einer EJB DeliveryMachine verwaltet. Die EJB erlaubt das Setzen und Erfragen der Fachkonfiguration jedes Automaten sowie die Berechnung der aktuellen und zukünftigen Auslastung mit Paketen.

Die aktuelle Fachkonfiguration, das heißt, die Anzahl der von einem Logistikpartner gemieteten Fächer sortiert nach Fachgröße, wird durch zwei EJBs BoxTypeAssignment und BoxType repräsentiert. Die DeliveryMachine ordnet jedem Logistikpartner eine Menge von BoxTypeAssignment EJBs zu, und zwar für jede gemietete Fachgröße eine. Jede BoxTypeAssignment speichert Typ und Anzahl der gemieteten Fächer. Die Fachgröße wird dabei in einer eigenen EJB mit Namen BoxType abgelegt.

Aufgrund des modularen Aufbaus sowohl der eingesetzten Paketfachanlage als auch des Logistiksystems können weitere Komponenten zu einem beliebigen Zeitpunkt integriert werden. Beispielsweise ist es möglich, weitere Komponenten für Auswertefunktionen bereitzustellen. Beispiele für eine derartige Datenauswertefunktionalität sind Auswertungen der Paket- und Kundendaten für statistische Zwecke.

Eine Protokollierung (Logging) ist insbesondere zur Überprüfung der Funktionsfähigkeit zweckmäßig.

Zum Logging von aufgetretenen Fehlern werden die durch den Application Server bereitgestellten Logging-Klassen genutzt. Diese werden zur besseren Nutzbarkeit gekapselt.

Die Klasse de.Post 24.util.P24Log stellt eine statische Logging-Methode bereit:
public static void log (int severity,
java.lang.String system,
java.lang.String msg,
java.lang.Throwable t)
Hierbei bedeutet :

| | |
|---|---|
| severity | Schwere des Fehlers. Es werden vier Fehlerklassen unterschieden, die über Konstanten innerhalb der P24Log-Klasse aufgerufen werden können: P24Log.debug, P24Log.info, P24Log.warning, P24Log.error |
| system | Name des Teilsystems |
| msg | zu speichernder Fehlertext |
| t | Exception |

Einfachere "abgespeckte" Versionen dieser Methode sind gleichfalls möglich, vorzugsweise durch eine Ersetzung von bestimmten Parametern durch vordefinierte Werte, beispielsweise:

| | |
|---|---|
| severity | P24Log.debug |
| system | Post 24 |
| t | entfällt |

Mit Hilfe der dargestellten Verfahrensweisen ist eine Anpassung der Konfigurations-Parameter schnell und zuverlässig möglich.

Der Fachmann kann die bei der Darstellung verwendeten Ausführungsbeispiele durch Ersetzung von Funktionalitäten anderer Programmiersprachen und Programmfunktionen ersetzen.

Auch ist es möglich, bei der bevorzugten Programmiersprache java andere als die genannten Funktionalitäten einzusetzen.

Insbesondere ist es für den Fachmann zweckmäßig, die aus den weiteren Dokumenten
http://java.sun.com/docs/codeconv/
Java Coding Conventions
bekannten Verfahrensschritte zur Implementation weiterer Funktionen und zur Abwandlung und Fortbildung der eingesetzten Funktionen einzusetzen.

## Patentansprüche

1. Elektronische Paketfachanlage mit einer Vielzahl von elektronischen Paketfächern, wobei jeweils mehreren elektronischen Paketfächern eine Bedienungseinheit zugeordnet ist, **dadurch gekennzeichnet, dass** eine zentralsteuereinheit zur Steuerung der Bedienungseinheiten vorgesehen ist, wobei die Zentralsteuereinheit ein Mittel zu einer veränderbaren Zuordnung der Paketfächer zu den Bedienungseinheiten enthält.

2. Elektronische Paketfachanlage nach Anspruch 1, **dadurch gekennzeichnet, dass** bei einem Ausfall einer Bedienungseinheit bisher dieser Bedienungseinheit zugeordnete Paketfächer einer anderen Bedienungseinheit zugeordnet werden.

3. Logistiksystem, **dadurch gekennzeichnet, dass** es mehrere, miteinander vernetzte elektronische Paketfachanlagen gemäß einem oder beiden der Ansprüche 1 und 2 und einen zentralen Datenbank-Server enthält, wobei der Datenbank-Server Mittel zur Speicherung und/oder Übermittlung von Informationen über den Belegungszustand der Paketfachanlagen aufweist, und dass ein zentral gesteuertes Zustellen von Paketsendungen an die einzelnen elektronischen Paketfachanlagen in Abhängigkeit vom Belegungszustand der einzelnen elektronischen Paketfachanlagen durchgeführt wird.

## Claims

1. An electronic parcel box system with a plurality of electronic parcel boxes, whereby in each case, several parcel boxes are associated with an operating unit, **characterized in that** a central control unit is provided for controlling the operating units, whereby the central control unit has a means for flexibly associating the parcel boxes with the operating units.

2. The electronic parcel box system according to Claim 1, **characterized in that**, if an operating unit malfunctions, parcel boxes that had been associated with this operating unit until are then associated with another operating unit.

3. A logistic system, **characterized in that** it contains several electronic parcel box systems networked with each other according to one or both of Claims 1 and 2 and also containing a central database server, whereby the database server has means for storing and/or transmitting data about the filling status of the parcel box systems, and **in that** a centrally operated delivery of postal parcels to the individual electronic parcel box systems is carried out as a function of the filling status of the individual electronic parcel box systems.

## Revendications

1. Dispositif électronique de casiers à paquets comportant une pluralité de casiers électroniques à paquets, dans laquelle chaque unité de manoeuvre est associée à plusieurs casiers électroniques à paquets, **caractérisé en ce qu'**une unité de commande centrale est prévue pour commander les unités de manoeuvre, l'unité de commande centrale comportant un moyen pour modifier l'attribution des casiers à paquets aux unités de manoeuvre.

2. Dispositif électronique de casiers à paquets selon la revendication 1, **caractérisé en ce qu'**en cas de panne d'une unité de manoeuvre, les casiers à paquets associés jusqu'alors à cette unité de manoeuvre sont associés à une autre unité de manoeuvre.

3. Système logistique, **caractérisé en ce qu'**il comporte plusieurs dispositifs électroniques de casiers à paquets en réseau les uns avec les autres suivant l'une ou les deux des revendications 1 et 2 et un serveur central de banque de données, le serveur de banque de données comprenant des moyens de sauvegarde et/ou de transmission d'informations sur l'état de charge des dispositifs de casiers à paquets et qu'un dépôt contrôlé de manière centralisée des envois de paquets dans chacun des dispositifs électroniques individuels de casiers à paquets est réalisé en fonction de l'état de charge des dispositifs électroniques individuel de casiers à paquets.
